# EUROPEAN PATENT APPLICATION

(11) **EP 1 696 622 A2**
(43) Date of publication of application: **30.08.2006**
(21) Application number: 06075311.8
(22) Date of filing: 14.02.2006
(51) Int. Cl.: H04L 27/22

(54) **Method and system using preamble detection to demodulate a phase shift key carrier signal**

(30) Priority: 28.02.2005 US 68416
(71) Applicant: Delphi Technologies, Inc., Troy, MI 48007 (US)
(72) Inventor: Walker, Glenn A., Greentown, IN 46936 (US); Dibiaso, Eric A., Kokomo, IN 46901 (US); Hiatt, Michael, Jr., Westfield, IN 46074 (US)
(74) Representative: Denton, Michael John

(57) **Abstract**

A method for performing demodulation of a phase shift key carrier signal includes receiving a data stream extracted from the carrier signal, the data stream having a preamble, and detecting the presence of the preamble. A phase/frequency correction is provided if the preamble is detected.

## Description

### TECHNICAL FIELD

The present invention generally relates to the transmission and reception of digital data, and more particularly, to demodulating a data stream containing the digital data in a satellite digital audio radio ("SDAR") system.

### BACKGROUND OF THE INVENTION

In October of 1997, the Federal Communications Commission (FCC) granted two national satellite radio broadcast licenses. In doing so, the FCC allocated twenty-five (25) megahertz (MHz) of the electromagnetic spectrum for satellite digital broadcasting, twelve and one-half (12.5) MHz of which are owned by XM Satellite Radio, Inc. of Washington, D.C. (XM), and 12.5 MHz of which are owned by Sirius Satellite Radio, Inc. of New York City, N.Y. (Sirius). Both companies provide subscription-based digital audio that is transmitted from communication satellites, and the services provided by these and other SDAR companies are capable of being transmitted to both mobile and fixed receivers on the ground.

In the XM satellite system, two (2) communication satellites are present in a geostationary orbit - one satellite is positioned at longitude 115 degrees (west) and the other at longitude eighty-five (85) degrees (east). Accordingly, the satellites are always positioned above the same spot on the earth. In the Sirius satellite system, however, three (3) communication satellites are present that all travel on the same orbital path, spaced approximately eight (8) hours from each other. Consequently, two (2) of the three (3) satellites are "visible" to receivers in the United States at all times. Since both satellite systems have difficulty providing data to mobile receivers in urban canyons and other high population density areas with limited line-of-sight satellite coverage, both systems utilize terrestrial repeaters as gap fillers to receive and re-broadcast the same data that is transmitted in the respective satellite systems. In order to improve satellite coverage reliability and performance, SDAR systems currently use three (3) techniques that represent different kinds of redundancy known as diversity. The techniques include spatial diversity, time diversity and frequency diversity. Spatial diversity refers to the use of two (2) satellites transmitting near-identical data from two (2) widely-spaced locations. Time diversity is implemented by introducing a time delay between otherwise identical data, and frequency diversity includes the transmission of data in different frequency bands. SDAR systems may utilize one (1), two (2) or all of the techniques.

Conventional SDAR systems employ QSPK modulation of the received carrier signal. Typical demodulation of the transmitted signals employs carrier and timing tracking loops that are dependent upon each other to recover frequency and timing information from the received signals. However, even given the many measures taken to improve the performance of SDAR systems, noise is introduced into the transmitted signals from various sources, for example, reflections from surrounding structures or terrain, other communication systems and electronic devices operating in the vicinity of the receiver, and solar activity. As the noise increases, the demodulator tracking loops become noisier, and lose their ability to accurately recover the frequency and timing information. The noisy tracking loops induce errors that directly impact the received signal, and as the noise ratio inside the loop filters becomes too small, digital implementation loss increases, i.e., signal degradation due to recovered carrier and timing errors. Accordingly, there is a need in the art for an apparatus and method for performing demodulation of a phase shift key carrier signal.

### SUMMARY OF THE INVENTION

The present invention provides an apparatus and method for performing demodulation of a phase shift key carrier signal. In doing so, the present invention provides an advantage over the prior art. While demodulation of a phase shift key carrier signal has been previously performed in data reception applications, until now, such systems were adversely affected by a low signal-to-noise ratio in the demodulator's phase-locked loop. The use of the present invention allows for demodulation at signal-to-noise ratios lower than that of prior art demodulators, enabling enhanced performance of the receivers that receive the satellite-transmitted signals in SDAR systems.

The invention, in one form thereof, relates to a method for performing demodulation of a phase shift key carrier signal. The method includes receiving a data stream extracted from the carrier signal, the data stream having a preamble; detecting the presence of the preamble; and if the preamble is detected, providing a phase/frequency correction.

The invention, in another form thereof, relates to a demodulator for demodulating a phase shift key carrier signal. The demodulator includes a demodulator input configured to receive a data stream having a preamble, and a phase-locked loop configured to track the data stream received by the demodulator input. The phase-locked loop includes an oscillator. The demodulator also includes a secondary tracking loop configured to provide a phase/frequency correction to the oscillator based on the preamble.

The invention, in yet another form thereof, relates to a demodulator for demodulating a phase shift key carrier signal. The demodulator includes input means for extracting a data stream from the carrier signal, the data stream having a preamble, and first tracking means for tracking the data stream received by the input means. The first tracking means includes an oscillator. The demodulator also includes second tracking means for providing a phase/frequency correction to the oscillator.

### BRIEF DESCRIPTION OF THE DRAWINGS

The above-mentioned and other features and objects of this invention, and the manner of attaining them, will become more apparent and the invention itself will be better understood by reference to the following description of embodiments of the invention taken in conjunction with the accompanying drawings, wherein:
Figure 1 is a diagrammatic view of a QPSK constellation;
Figure 2 is a diagrammatic view of an SDAR system embodying the present invention;
Figure 3 is a detailed block diagram of an SDAR communication embodying the present invention;
Figure 4 is a block diagram of a demodulator in accordance with the present invention;
Figure 5 is a detailed block diagram of the demodulator of Figure 4;
Figure 6 is a flow chart illustrating a method of the present invention as utilized in an SDAR receiver;
Figure 7 is an illustrative view of a constellation chart for 64 - quadrature amplitude modulation (QAM) with an embedded quadrature phase shift keying (QPSK) stream;
Figure 8 is detailed block diagram of another embodiment of an SDAR communication embodying the present invention; and
Figure 9 is a detailed block diagram of the demodulator of Figure 8.

Corresponding reference characters indicate corresponding parts throughout the several views. Although the drawings represent embodiments of the present invention, the drawings are not necessarily to scale and certain features may be exaggerated in order to better illustrate and explain the present invention. The exemplifications set out herein illustrate embodiments of the invention in several forms and such exemplifications are not to be construed as limiting the scope of the invention in any manner.

### DESCRIPTION OF THE PREFERRED EMBODIMENT

The embodiments disclosed below are not intended to be exhaustive or to limit the invention to the precise forms disclosed in the following detailed description. Rather, the embodiments are chosen and described so that others skilled in the art may utilize their teachings.

For the purposes of the present invention, certain terms shall be interpreted in accordance with the following definitions.

Baseband: A frequency having content in the vicinity of direct current using a channel shared by upstream and downstream links (which may be different bandwidths) and interleaving messages with techniques like time division multiplexing.

Carrier: A single frequency electromagnetic wave the modulations of which are used as communications signals.

Channel: A propagation medium for communication such as a path along which information is the form of an electrical signal passes (e.g., wire, air, water).

Detector: A circuit that is capable of determining the content of a signal.

Downlink: To transmit data from a satellite to a receiver on earth.

Feed-Forward Error Correction (FFEC): A method of improving secondary data detection. By knowing the relative "I" (in-phase) and "Q" (quadrature) components of a constellation quadrant, the secondary detector may be enhanced to perform better by having a priori knowledge from the first detector to assist detection.

First Level Data and/or Primary Data: Existing data that may be interpreted by current (i.e., "legacy") SDAR receivers. Because the first level data can be interpreted by the legacy receivers, the first level data may also be considered to have backwards compatibility.

Hierarchical Modulation: A method in which two separate data or bit streams are modulated onto a single data stream by superimposing an additional data stream upon, mapped on, or embedded within the primary data transmission. The additional data stream may have a different data rate than the primary data stream. As such, the primary data is more susceptible to noise than it would be in a non-hierarchical modulation scheme. The usable data of the additional stream may be transmitted with a different level of error protection than the primary data stream. Broadcasters of SDAR services may use the additional and primary data streams to target different types of receivers, as will be explained below.

Legacy receiver: A current or existing SDAR receiver that is capable of interpreting first level data. Legacy receivers typically interpret second level data as noise.

Preamble: A known symbol or symbols in a transmission packet (typically used for synchronization).

Quadrature: A method of coding information that groups data bits and transmits two separate signals on a carrier by summing the cosine and sine of the separate signals to produce a composite signal which may be later demodulated to recover both signals.

Second Generation Receiver: A SDAR receiver that contains hardware and/or software enabling the receiver to interpret second level data (e.g., demodulator enhancements). Second generation receivers may also interpret first level data.

Second Level Data, Secondary Data and/or Hierarchical Data: The additional data that is superimposed on the first level data to create a hierarchically modulated data stream. Second level data may be interpreted by SDAR receivers containing the appropriate hardware and/or software to enable such interpretation (i.e., "second generation" receivers). Second level, or secondary, data may perform differently from first level, or primary, data.

Signal: A detectable physical quantity or impulse by which information can be transmitted.

Symbol: A unit of data (byte, floating point number, spoken word, etc.) that is treated independently.

Uplink: A communications channel or facility on earth for tranmission to a satellite, or the communications themselves.

Waveform: A representation of the shape of a wave that indicates its characteristics (frequency and amplitude).

The embodiments described below are implemented in a quadraphase shift key (QPSK) system, although it will be understood by those skilled in the art that the present invention is not limited to such an implementation, but rather, may be employed in other systems involving demodulation using a phase-locked loop, such as, for example, a bi-phase or n-phase shift key modulated system.

Quadrature Amplitude Modulation (QAM) is one form of multilevel amplitude and phase modulation that is often employed in digital data communication systems. Using a two-dimensional symbol modulation composed of a quadrature (orthogonal) combination of two (2) pulse amplitude modulated signals, a QAM system modulates a source signal into an output waveform with varying amplitude and phase. Data to be transmitted is mapped to a two-dimensional, four-quadrant signal space, or constellation. The QAM constellation employs "I" and "Q" components to signify the in-phase and quadrature components, respectively. The constellation also has a plurality of phasor points, each of which represent a possible data transmission level. Each phasor point is commonly called a "symbol," represents both I and Q components and defines a unique binary code. An increase in the number of phasor points within the QAM constellation permits a QAM signal to carry more information.

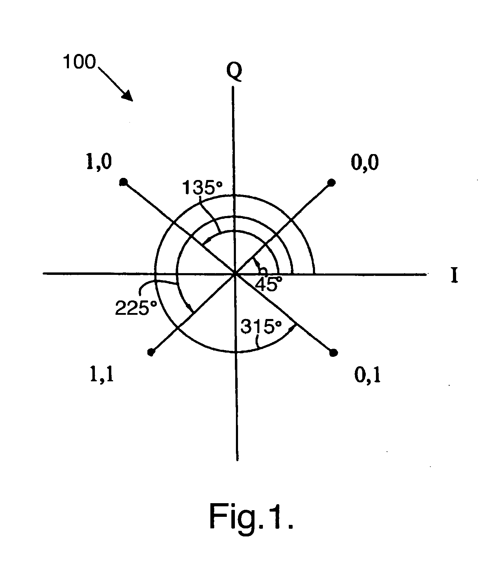

Many existing systems utilize QPSK modulation systems. In such QPSK systems, a synchronous data stream is modulated onto a carrier frequency before transmission over the satellite channel, and the carrier can have four (4) phase states, e.g., 45 degrees, 135 degrees, 225 degrees or 315 degrees. Thus, similar to QAM, QPSK employs quadrature modulation where the phasor points can be uniquely described using the I and Q axes. In contrast to QAM, however, the pair of coordinate axes in QPSK can be associated with a pair of quadrature carriers with a constant amplitude, thereby creating a four (4) level constellation, i.e., four (4) phasor points having a phase rotation of 90 degrees. Differential quadrature phase shift keying (D-QPSK) refers to the procedure of generating the transmitted QPSK symbol by calculating the phase difference of the current and the preceding QPSK symbol. Therefore, a non-coherent detector can be used for D-QPSK because it does not require a reference in phase with the received carrier. Referring to FIG. 1, QPSK constellation 100 having two (2) transmitted bits/symbol is depicted. Phasors "00", "10", "11 ", "01" correlate to a phase of 45 degrees, a phase of 135 degrees, a phase of 225 degrees and a phase of 315 degrees, respectively, in a Cartesian coordinate system having I has the abscissa and having Q as the ordinate.

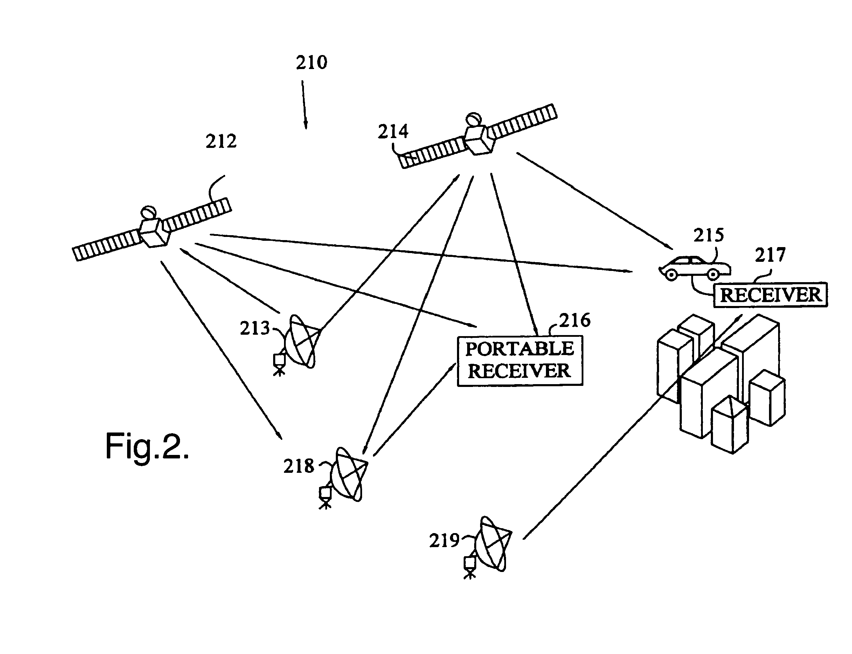

Referring to FIG. 2 a diagrammatic view of an SDAR system employing the present invention is depicted. SDAR system 210 includes transmitter 213, and first and second communication satellites 212, 214, which transmit line-of-sight signals to SDAR receivers 216, 217 located on the earth's surface. A third satellite (not shown) may be included in other SDAR systems. Satellites 212, 214, as indicated above, may provide for spatial, frequency and time diversity. As shown, receiver 216 is a portable receiver such as a handheld radio or wireless device. Receiver 217 is a mobile receiver for use in vehicle 215. SDAR receivers 216, 217 may also be stationary receivers for use in a home, office or other non-mobile environment.

SDAR system 210 further includes plurality of terrestrial repeaters 218, 219. Terrestrial repeaters 218, 219 receive and retransmit the satellite signals to facilitate reliable reception in geographic areas where the satellite signals are obscured from the view of receivers 216, 217 by obstructions such as buildings, mountains, canyons, hills, tunnels, etc. The signals transmitted by satellites 212, 214 and terrestrial repeaters 218, 219 are received by receivers 216, 217, which either combine or select one of the signals as receiver's 216, 217 output.

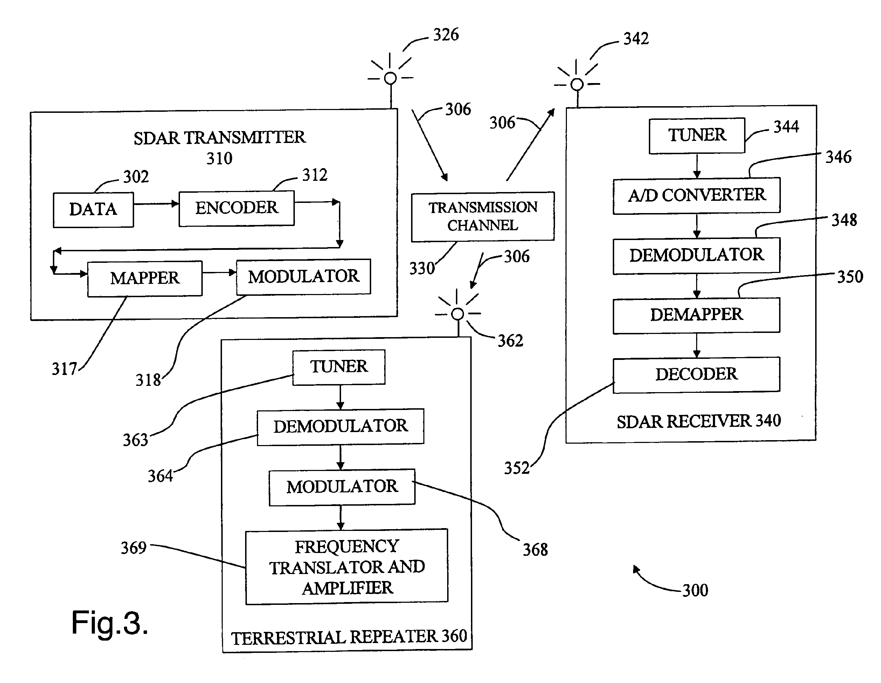

FIG. 3 illustrates a block diagram of an SDAR communication system that employs the present invention. In an exemplary embodiment of the present invention, SDAR communication system 300 includes SDAR transmitter 310, SDAR receiver 340 and terrestrial repeater 360. SDAR communication system 300 inputs data content 302 and performs data processing and frequency translation within encoder 312, mapper 317, and modulator 318. The digital data is transmitted over transmission channel 330 in the form of carrier signal 306 to receiver 340 or terrestrial repeater 360. Generally, receiver 340 performs the converse operations of transmitter 310 to recover data 302. Repeater 360 generally re-transmits data 302 to receiver 340.

SDAR transmitter 310 includes encoder 312, mapper 317, modulator 318, and antenna 326. The audio, video, or other type of content to be transmitted comprises input signal 302, which is typically arranged as series of k-bit symbols. Encoder 312 encodes the k bits of each symbol as well as blocks of the k-bit symbols of data 302 into a data stream. In an exemplary embodiment of the present invention, encoder 312 may encode data 302 using a block or a convolutional forward error correction (FEC) algorithm. Alternatively, it is contemplated that encoder 312 may encode data 302 using a turbo coding algorithm or a low density parity check FEC algorithm. In addition, it is contemplated that other FEC encoding methods may be utilized to encode data 302, including, for example, Hamming codes, cyclic codes and Reed-Solomon (RS) codes.

Once encoded, the transmit data stream is passed to mapper 317, which maps the data stream into symbols composed of I and Q signals. Mapper 317 may be implemented as a look-up table where sets of bits from the transmit signal are translated into I and Q components representing constellation points or symbols.

Referring back to FIG. 3, after mapper 317 translates the encoded data stream into I and Q components, the I and Q components are modulated by modulator 318. The modulation used is one of a number of modulation techniques, including BPSK, QPSK, differential Q-PSK (D-QPSK) or pi/4 differential QPSK (pi/4 D-QPSK). According to the technique that modulator 318 employs, modulator 318 may be any of a QPSK, a D-QPSK or a pi/4 D-QPSK modulator. Each modulation technique is a different way of transmitting the data across channel 330. The data bits are grouped into pairs, and each pair is represented by a symbol, which is then transmitted across channel 330 after carrier signal 306 is modulated.

Referring back to FIG. 2, after modulator 318 modulates the data stream to create a transmission signal, transmitter 213 uplinks the transmission signal to communication satellites 212, 214. Satellites 212, 214, having a "bent pipe" design, receive the transmitted modulated signal, perform frequency translation on the signal, and re-transmit, or broadcast, the signal to either one or more of plurality of terrestrial repeaters 218, 219, receivers 216, 217, or both.

As shown in FIG. 3, terrestrial repeater 360 includes terrestrial receiving antenna 362, tuner 363, demodulator 364, modulator 368 and frequency translator and amplifier 369. Demodulator 364 is capable of down-converting the modulated downlinked signal to a time-division multiplexed bit stream or other suitable format.

Also shown in FIG. 3, SDAR receiver 340 contains hardware (e.g., a chipset) and/or software to process any received modulated signals as well. Receiver 340 includes one or more antennas 342 for receiving signals transmitted from either communication satellites 212, 214, terrestrial repeaters 218, 219, or both (FIG. 2). Receiver 340 also includes tuner 344, analog-to-digital converter (ADC) 346, demodulator 348, de-mapper 350, and decoder 352.

Tuner 344 translates the received signals to baseband. Separate tuners 344 may be used to downmix the signals received from communication satellites 212, 214 and the signals received from terrestrial repeaters 218, 219.

It is also envisioned that one tuner may be used to downmix both the signals transmitted from communication satellites 212, 214 and the signals transmitted from repeaters 218, 219.

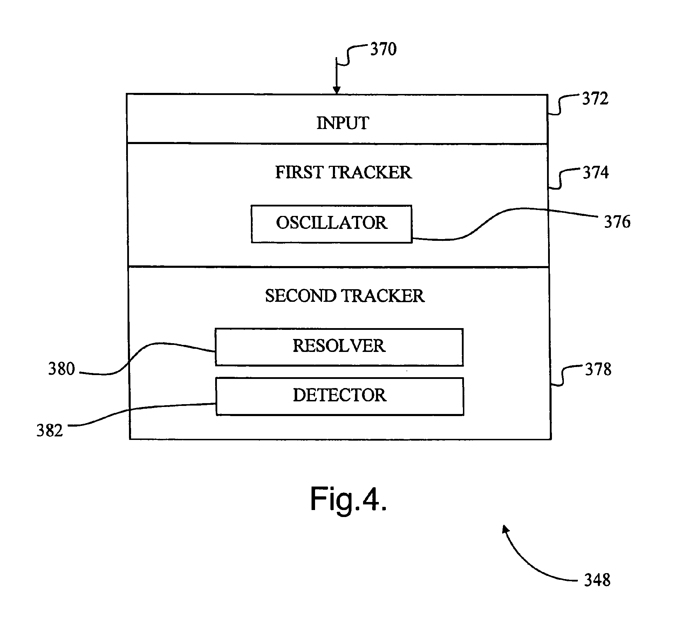

Once the received carrier signal 306 is translated to baseband, the signal is passed to ADC 346 and converted into data stream 370 (FIG. 4) containing data and a preamble. The preamble may include a preamble sequence associated with the I component and a separate preamble sequence associated with the Q component. The audio or video data in data steam 370 is located between the preamble sequences. The preamble serves as a training sequence, and, for example, is in the form of a CAZAC (Constant Amplitude Zero Auto Correlation) sequence. Data stream 370 is then demodulated by demodulator 348 to produce the original I and Q components. De-mapper 350 translates the I and Q components into an encoded data stream, which is then passed to decoder 352. Decoder 352 employs known bit and block decoding methods to decode the data stream 370 to produce the original input signals containing data 302.

Referring now to FIG. 4, an embodiment of demodulator 348 is depicted diagrammatically. Demodulator 348 includes input 372 for extracting data stream 370 from carrier signal 306, first tracker 374 including oscillator 376 for tracking data stream 370 received by input 372, and second tracker 378 for providing a phase/frequency correction to oscillator 376. Input 372 may be, for example, a tuner and an analog-to-digital converter.

First tracker 374 is in the form of a phase-locked loop, for example a Costas loop. Second tracker 378 includes resolver 380 for determining if data stream 370 has a low signal-to-noise ratio, and detector 382 for detecting the preamble if resolver 380 determines that data stream 370 has a low signal-to-noise ratio. Second tracker 378 provides the phase/frequency correction to oscillator 376 based at least in part on detector 382 detecting the preamble. In providing phase/frequency correction, second tracker 378 increases the detected power of data stream 370 during the passage of the preamble through second tracker 378, allowing phase/frequency information in data stream 370 to be determined notwithstanding a low signal-to-noise ratio. In addition, second tracker 378 generates a phase error correction signal from data stream 370, and provides the phase/frequency correction to oscillator 376 based at least in part on the phase error correction signal.

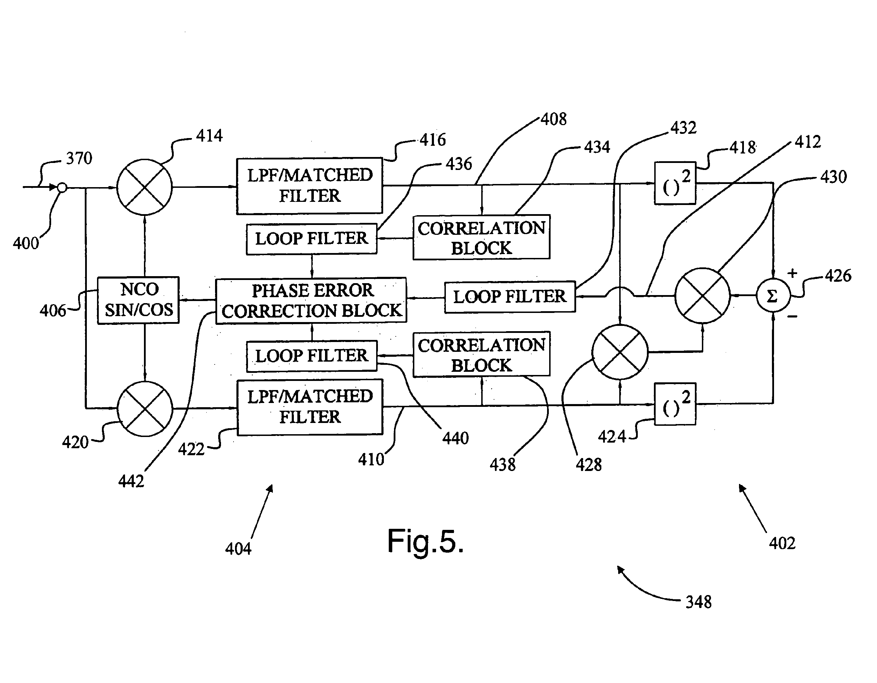

The embodiment of FIG. 4 is now described in greater detail with reference to the schematic diagram of FIG. 5. Demodulator 348 includes demodulator input 400, phase-locked loop 402, and secondary tracking loop 404.

Demodulator input 400 is an input node of demodulator 348, and is configured to receive data stream 370 extracted from carrier signal 306, for example, via tuner 344 and ADC 346. Phase-locked loop 402 includes oscillator 406, and is configured to track data stream 370 received by demodulator input 400, for example to track phase changes in data stream 370. Secondary tracking loop 404 is configured to provide a phase/frequency correction to oscillator 406, based on the preamble, in order to extract the in-phase components and quadrature components, i.e., the I and Q components from data stream 370, as described in greater detail below.

Phase-locked loop 402 is exemplified by a Costas loop having I channel 408 operating on the I data component, Q channel 410 operating on the Q data component, and error channel 412 used for controlling oscillator 406. Data stream 370 passes into each of I channel 408 and Q channel 410, each of which feed into error channel 412. In the embodiment shown, oscillator 406 is a numerically controlled oscillator (NCO), although any suitable oscillator may be used without departing from the scope of the present invention. For example, a voltage controlled oscillator (VCO) might be used, in which case phase-locked loop 402 would be accordingly configured to operate therewith.

I channel 408 includes mixer 414, low pass filter/matched filter 416, and squaring unit 418. Q channel 410 similarly includes mixer 420, low pass filter/matched filter 422, and squaring unit 424. Mixer 414 and mixer 420 are used in conjunction with oscillator 406 to separate the sine and cosine components of data stream 370, and provide as output a DC component and a high frequency component. Low pass filter/matched filter 416 receives the output of mixer 414, and passes only the baseband signal containing the I data component into I channel 408. Similarly, low pass filter/matched filter 422 receives the output of mixer 420, and passes only the baseband signal containing the Q data component into Q channel 410. In each case, the baseband signal output by the respective low pass filter/matched filter contains amplitude information centered around DC. Thus, each of the I and Q data components are in the form of positive or negative amplitude information, which is then rendered into positive amplitude information by squaring unit 418 and squaring unit 424, respectively. However, because the amplitude sign is removed from the I channel 408 and Q channel 410, phase-locked loop 402 in the form of a Costas loop has a pi/4 phase ambiguity, i.e., the Costas loop cannot distinguish between phase angles of 45 degrees, 135 degrees, 225 degrees, and 315 degrees.

Phase-locked loop 402 also includes summer 426, mixer 428, mixer 430, and loop filter 432. Each of I channel 408 and Q channel 410 feed the output of squaring unit 418 and squaring unit 424, respectively, into summer 426, which generates an error signal based on the phase and frequency of oscillator 406. Each of I channel 408 and Q channel 410 also feed the output of low pass filter/matched filter 416 and low pass filter/matched filter 422, respectively, into mixer 428. The error signal from summer 426 and the output of mixer 428 are then passed into mixer 430 to provide an error correction signal into loop filter 432 as a control input to oscillator 406.

If phase-locked loop 402 is locked, the I and Q magnitudes will be the same. Any difference will be caused by noise and/or an error in oscillator 406 phase/frequency. Hence, the output of summer 426 is noise plus oscillator 406 (NCO) error. Since summer 426 cannot determine what phase angle the loop is near, the output must be compensated. That is, the direction to adjust the phase to one of the Pi/4 ambiguities is dependent on which ambiguity phase-locked loop 402 is closest to. For example, if the current NCO phase is 50 degrees, summer 426 error is negative (the Q path is larger in magnitude than the I path), and NCO phase angle is reduced. On the other hand if the NCO phase is 140 degrees, the phase is still slightly larger and the NCO phase angle must be reduced. However, at 140 degrees, the I path is larger in magnitude than the Q path and summer 426 error is positive, and the NCO phase angle must also be reduced. This reduction is performed by mixer 428 and mixer 430, which adjust summer 426 error based on the current quadrant in which phase-locked loop 402 is operating.

Loop filter 432 is a low pass filter that averages the error output of summer 426 to minimize the effect of noise. Noise on the NCO (oscillator 406) control will also mix with the noise on received data stream 370, creating an even noisier summer 426 error output. For this reason, loop filter 432 is usually adjusted to be fast for initial acquisition (i.e finding the initial phase/frequency), although this requires a relatively high signal to noise ratio. Once the system is tracking, however, loop filter 432 is slowed to filter out more noise. As loop filter 432 gets slower, the characteristics of the noise change from white noise to flicker, shot and random walk noise.

Because of the phase ambiguity of the Costas loop, the I data component and Q data component can be rotated and/or inverted, reducing the performance of SDAR receiver 340. The inventors have discovered that a secondary preamble tracking loop, such as secondary tracking loop 404, may be employed to reduce the likelihood of the I data component and Q data component being rotated and/or inverted. Without secondary tracking loop 404, any error in the oscillator 406 is seen as a low frequency oscillation along with cross coupling of I channel 408 and Q channel 410 (not including noise). This cross coupling increases the magnitude of the signal in one channel at the expense of the other, depending on the phase error in oscillator 406 and the data transmitted. Secondary tracking loop 404 reduces such cross coupling by reducing the error in oscillator 406. For example, when the signal, i.e., data stream 370, becomes weak, e.g., during low signal-to-noise ratio conditions, secondary tracking loop 404 is used to help maintain oscillator 406 by detecting the direction and magnitude of slow drifts, e.g., random walk, in the primary frequency and timing loop, phase-locked loop 402, and to provide a correction to such errors.

Accordingly, secondary tracking loop 404 includes correlation block 434 and loop filter 436 associated with I channel 408, and correlation block 438 and loop filter 440 associated with Q channel 410. Each of correlation block 434 and correlation block 438 are coupled to phase-locked loop 402, and coupled to loop filter 436 and loop filter 440, respectively. Secondary tracking loop 404 also includes phase error correction block 442 coupled to oscillator 406 as part of error channel 412. The output of low pass filter/matched filter 416 feeds into correlation block 434, which provides input to loop filter 436. Similarly, the output of low pass filter/matched filter 422 feeds into correlation block 438, which provides input to loop filter 440. The output of loop filter 432, loop filter 436, and loop filter 440 are input signals to phase error correction block 442, which outputs the control signal to oscillator 406. Each of correlation block 434 and correlation block 438 includes one or more correlators, for example, early, prompt, and late correlators, and are used detect the preamble.

Secondary tracking loop 404 is configured to individually detect the preamble relative to the I data component and individually detect the preamble relative to the Q data component using correlation block 434 and correlation block 438, respectively. In the embodiment depicted, correlation block 434 and correlation block 438 are the same, although it is contemplated that correlation block 434 and correlation block 438 may be different, for example, if the preamble includes a training sequence for I channel 408 different than the corresponding training sequence for Q channel 410.

Secondary tracking loop 404 is configured to determine if data stream 370 has a low signal-to-noise ratio, and if so, to detect the preamble, increasing a detected power of data stream 370 during a passage of the preamble through secondary tracking loop 404, by which secondary tracking loop 404 provides a phase/frequency correction to oscillator 406. More specifically, phase error correction block 442 is configured to determine if data stream 370 has a low signal-to-noise ratio, and each of correlation block 434 and correlation block 43 8 are configured to increase the detected power of data stream 370 during the passage of the preamble through secondary tracking loop 404. If phase error correction block 442 determines that data stream 370 has a low signal-to-noise ratio in phase-locked loop 402, secondary tracking loop 404 is used to provide correction to oscillator 406. If data stream 370 does not have a low signal-to-noise ratio, the unmodified output of loop filter 432 is used to control oscillator 406.

Phase error correction block 442 is a state machine/algorithm that uses both the Costas loop error (phase-locked loop 402 error) along with a correlation block error generated by correlation block 434 and correlation block 438 to adjust the phase angle of oscillator 406 based on a phase error correction signal. As loop filter 432 is slowed, the resulting noise may cause slow phase drifting. The correlation block error is used to correct for this slow phase drifting, allowing phase-locked loop 402 to employ a loop bandwidth much narrower than the training sequence. Secondary tracking loop 404 detects random walk errors and compensates for them based on the output of correlation block 434 and correlation block 438.

Each correlation block matches the known preamble sequences with incoming data in data stream 370 to find the preamble in the incoming data by correlating the known preamble sequences with the preambles, and outputs the correlation of the received signal with the stored training sequences. Because the preamble is typically longer than an individual bit, the correlation block error, i.e., the output of correlation block 434 and correlation block 438, is much higher in detected power than the incoming data stream 370 received by the correlation blocks. This allows phase/frequency information in data stream 370 to be determined notwithstanding the low signal-to-noise ratio.

Phase error correction block 442 is configured to generate a phase error correction signal from data stream 370 based on the output of correlation block 434 and correlation block 438, whereby secondary tracking loop 404 provides a phase/frequency correction to oscillator 406 based at least in part on the phase error correction signal. When oscillator 406 is tracking, the output of each of correlation block 434 and correlation block 438 is periodic pulses that occur every time the training sequence in data stream 370 occurs, which has known timing. These outputs are used, after filtering with the respective loop filter 436 and loop filter 440, as error signal inputs to phase error correction block 442, which provides to oscillator 406 a phase error correction signal separate from the phase-locked loop 402 error signal.

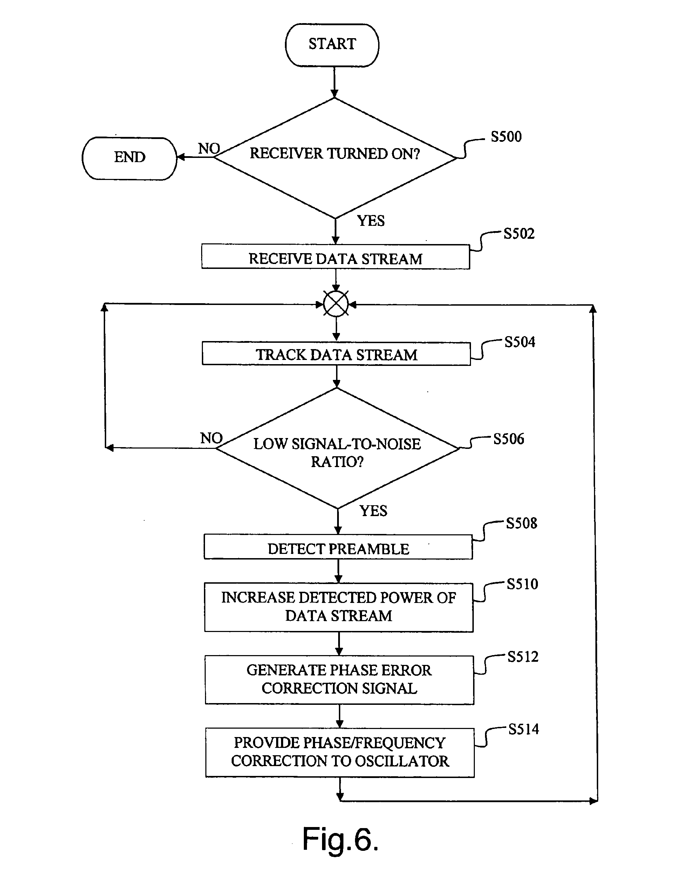

Referring now to FIG. 6, there is generally depicted a method for performing demodulation of phase shift key carrier signal 306 with demodulator 348 in accordance with the present invention.

At step S500, the method of performing demodulation of data stream 370 is initiated when SDAR receiver 340 is turned on. Demodulation ends when receiver 340 is turned off.

At step S502, demodulator 348 receives data stream 370, extracted from carrier signal 306, via demodulator input 400.

At step S504, phase-locked loop 402 in the form of a Costas loop tracks data stream 370, using oscillator 406. Phase-locked loop 402 continues to track data stream 370 as long as data stream 370 is received by demodulator 348.

At step S506, demodulator 348 determines if data stream 370 has a low signal-to-noise ratio using phase error correction block 442. If not, phase-locked loop 402 continues tracking data stream 370 in step S504. If it is determined that data stream 370 has a low signal-to-noise ratio, process flow proceeds to step S508 for additional tracking control via secondary tracking loop 404.

At step S508, secondary tracking loop 404 detects the presence of the preambles of data stream 370 using correlation block 434 for the I data component and using correlation block 438 for the Q data component, correlating the preamble with a known preamble sequence. As set forth above, data stream 370 includes an I data component and a Q data component, each of which is associated with a preamble. The preamble is individually detected relative to the I data component by correlation block 434 and individually detected relative to the Q data component using correlation block 438.

At step S510, secondary tracking loop 404 increases the detected power of data stream 370 during the passage of the preamble through secondary tracking loop 404 using correlation block 434 and correlation block 438. By increasing the detected power of data stream 370 during conditions of low signal-to-noise ratio, secondary tracking loop 404 has increased sensitivity to data stream 370, allowing determination of the phase of data stream 370 so that a phase/frequency correction may be provided to oscillator 406.

At step S512, data stream 370 is provided to phase error correction block 442 to generate a phase error correction signal based on the output of correlation block 434 and correlation block 438 via loop filter 436 and loop filter 440 for the I data component and the Q data component, respectively.

At step S514, phase error correction block 442 provides a phase error correction signal as a phase/frequency correction to oscillator 406 via the phase error correction signal, based at least in part on detecting the presence of the preamble.

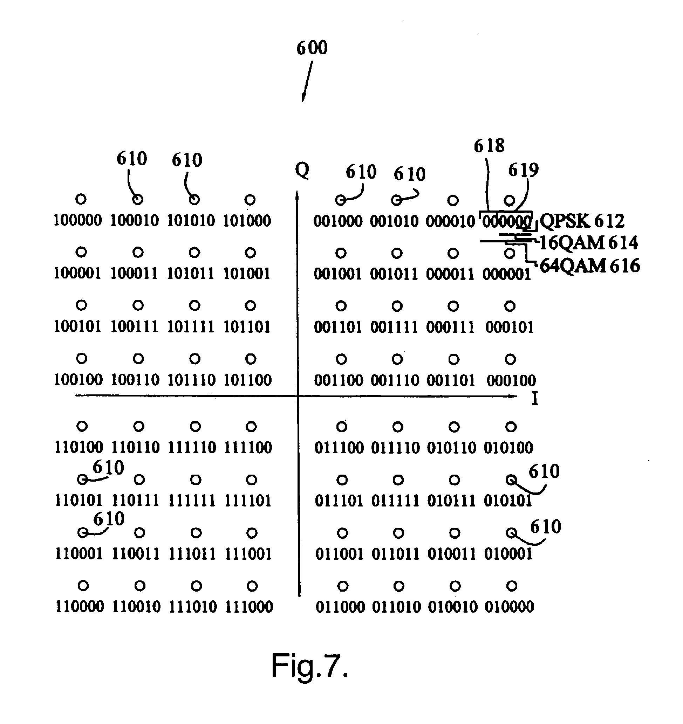

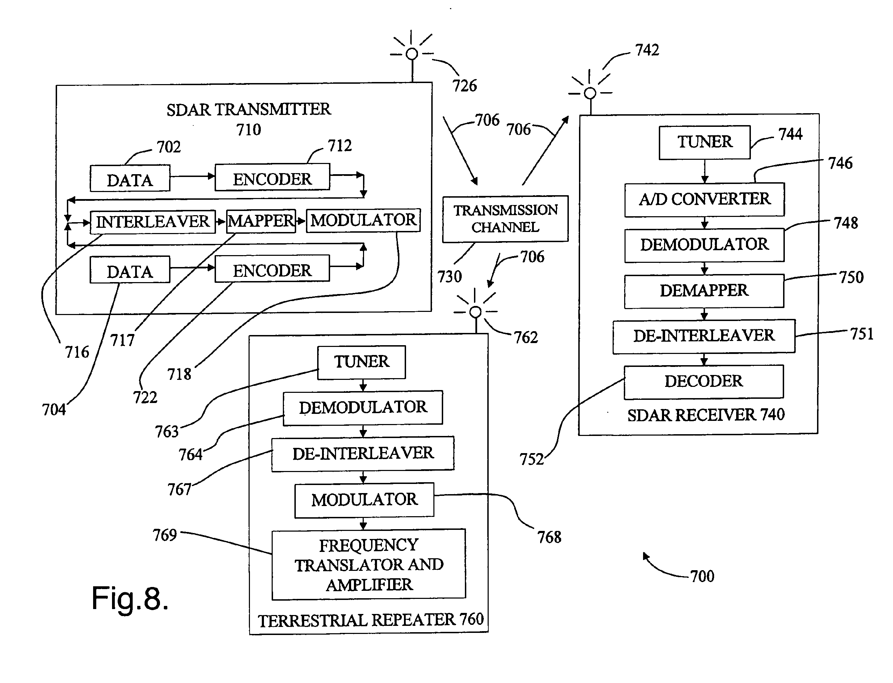

Referring now to FIGS. 7 and 8, another embodiment of the present invention demodulator is described with respect to a hierarchical modulation scheme.

Hierarchical modulation, used in DVB-T systems as an alternative to conventional QPSK, 16-QAM and 64-QAM modulation methods, may better be explained with reference to FIG. 7. FIG. 7 illustrates 64-QAM constellation 100. Each permissible digital state is represented by phasors 110 in the I/Q plane. Since eight (8) by eight (8) different states are defined, sixty-four (64) possible values of six (6) bits may be transmitted in 64-QAM constellation 100. FIG. 7 shows the assignment of binary data values to the permissible states. In a 16-QAM constellation, there are four (4) by four (4) different states and four (4) transmitted bits, in a 4-PSK constellation, there are two (2) by two (2) states and two (2) transmitted bits, and in a BPSK constellation, there is one (1) state and one (1) transmitted bit.

In systems employing hierarchical modulation schemes, the possible states are interpreted differently than in systems using conventional modulation techniques (e.g., QPSK, 16-QAM and 64-QAM). By treating the location of a state within its quadrant and the number of the quadrant in which the state is located as a priori information, two separate data streams may be transmitted over a single transmission channel. While 64-QAM constellation 100 is still being utilized to map the data to be transmitted, it may be interpreted as the combination of a 16-QAM and a 4-PSK modulation. FIG. 7 shows how 64-QAM constellation 100, upon which is mapped data transmitted at six (6) bits/symbol 116, may be interpreted as including QPSK constellation 112 (which includes mapped data transmitted at two (2) bits/symbol) combined with 16-QAM constellation 114 (which includes mapped data transmitted at four (4) bits/symbol). The combined bit rates of QPSK and the 16-QAM data steams is equal to the bit rate of the 64-QAM data stream.

In systems employing hierarchical modulation schemes, one (1) data stream is used as a secondary data stream while the other is used as a primary data stream. The secondary data stream typically has a lower data rate than the primary stream. Again referring to FIG. 7, using this hierarchical modulation scheme, the two (2) most significant bits 618 may be used to transmit the secondary data to second generation receivers while the remaining four (4) bits 619 may be used to code the primary data for transmission to the legacy receivers.

FIG. 8 illustrates a block diagram of a SDAR communication system in which hierarchical modulation is utilized. In an exemplary embodiment employing the present invention, SDAR communication system 700 includes SDAR transmitter 710, SDAR receiver 740 and terrestrial repeater 760. As in conventional SDAR communication systems, SDAR communication system 700 will input data content and perform processing and frequency translation within transmitter 710. The digital data is transmitted over transmission channel 730 in the form of carrier signal 706 to receiver 740 or terrestrial repeater 760. Generally, receiver 740 performs the converse operations of transmitter 710 to recover the transmitted data. Repeater 760 generally re-transmits the data to receiver 740. Unlike conventional SDAR communication systems, however, transmitter 710, receiver 740 and repeater 760 provide hardware enabling SDAR communication system 700 to utilize a hierarchical modulation scheme to transmit and receive more digital data than conventional systems.

SDAR transmitter 710 includes encoders 712, 722, inner interleaver 716, mapper 717, modulator 718, and antenna 726. The audio, video, or other form of content to be transmitted comprises primary input signal 702 and secondary input signal 704, which are typically arranged as series of k-bit symbols. Primary input signal 702 contains primary, or first level, data and secondary input signal 704 contains secondary, or second level, data. Encoders 712, 722 encode the k bits of each symbol as well as blocks of the k-bit symbols. In other embodiments of the present invention, separate encoders may be used to encode the blocks of k-bit symbols, for example, outer and inner encoders. In an exemplary embodiment of the present invention, encoder 712 may encode primary data stream 702 using a block or a convolutional forward error correction (FEC) algorithm, and encoder 722 may encode secondary data stream 704 using a turbo coding algorithm or a low density parity check FEC algorithm. It is contemplated that other FEC encoding methods may be utilized to encode primary and secondary data streams 702, 704, including, for example, Hamming codes, cyclic codes and Reed-Solomon (RS) codes.

Inner interleaver 716 multiplexes encoded secondary content data stream 704 with encoded primary content data stream 702 to form a transmit data stream. This transmit data stream is passed to mapper 717, which maps the data stream into symbols composed of I and Q signals. Mapper 717 may be implemented as a look-up table where sets of bits from the transmit signal are translated into I and Q components representing constellation points or symbols.

After mapper 717 translates encoded and interleaved primary and secondary data streams 702, 704, respectively, into I and Q components, the I and Q components are modulated by modulator 718. Modulation enables both primary data stream 702 and secondary data stream 704 to be transmitted as a transmission signal via antenna 726 over transmission channel 730. Primary data stream 702 is modulated with secondary data stream 704 using one of a number of modulation techniques, including BPSK, QPSK, differential Q-PSK (D-QPSK) or pi/4 differential QPSK (pi/4 D-QPSK). According to the technique that modulator 718 employs, modulator 718 may be any of a QPSK, a D-QPSK or a pi/4 D-QPSK modulator. Each modulation technique is a different way of transmitting the data across channel 730. The data bits are grouped into pairs, and each pair is represented by a symbol, which is then transmitted across channel 730 after carrier signal 706 is modulated.

Referring back to FIG. 2, after modulator 718 modulates first data stream 702 and second level data stream 704 (FIG. 3) to create a transmission signal, transmitter 213 uplinks the transmission signal to communication satellites 212, 214. Satellites 212, 214, having a "bent pipe" design, receive the transmitted hierarchically modulated signal, performs frequency translation on the signal, and re-transmits, or broadcasts, the signal to either one or more of plurality of terrestrial repeaters 218, 219, receivers 216, 217, or both.

Referring again to FIG. 8, terrestrial repeater 760 includes terrestrial receiving antenna 762, tuner 763, demodulator 764, de-interleaver 767, modulator 768 and frequency translator and amplifier 769. Demodulator 764 is capable of down-converting the hierarchically modulated downlinked signal to a time-division multiplexed bit stream, and de-interleaver 767 re-encodes the bit-stream in a suitable format, e.g. an orthogonal frequency division multiplexing (OFDM) format for terrestrial transmission. OFDM modulation divides the bit stream between a large number of adjacent subcarriers, each of which is modulated with a portion of the bit stream using one of the M-PSK, differential M-PSK (D-MPSK) or differential pi/4 M-PSK (pi/4 D-MPSK) modulation techniques. Accordingly, if a hierarchically modulated signal is transmitted to one or both terrestrial repeaters 218, 219 (FIG. 2), terrestrial repeaters 218, 219 receive the signal, decode the signal, re-encode the signal using OFDM modulation and transmit the signal to one or more receivers 216, 217. Because the signal contains both the first and second level data, the terrestrial signal maintains second level data bit spreading over multiple symbols. Also shown in FIG. 8, SDAR receiver 740 contains hardware (e.g., a chipset) and/or software to process any received hierarchically modulated signals as well. Receiver 740 includes one or more antennas 742 for receiving signals transmitted from either communication satellites 212, 214, terrestrial repeaters 218, 219, or both (FIG. 2). Receiver 740 also includes tuner 744, analog-to-digital converter (ADC) 746, demodulator 748, de-mapper 750, de-interleaver 751, and decoder 752. Tuner 744 translates the received signals to baseband. Separate tuners may be used to downmix the signals received from communication satellites 212, 214 and the signals received from terrestrial repeaters 218, 219. It is also envisioned that one tuner may be used to downmix both the signals transmitted from communication satellites 212, 214 and the signals transmitted from repeaters 218, 219.

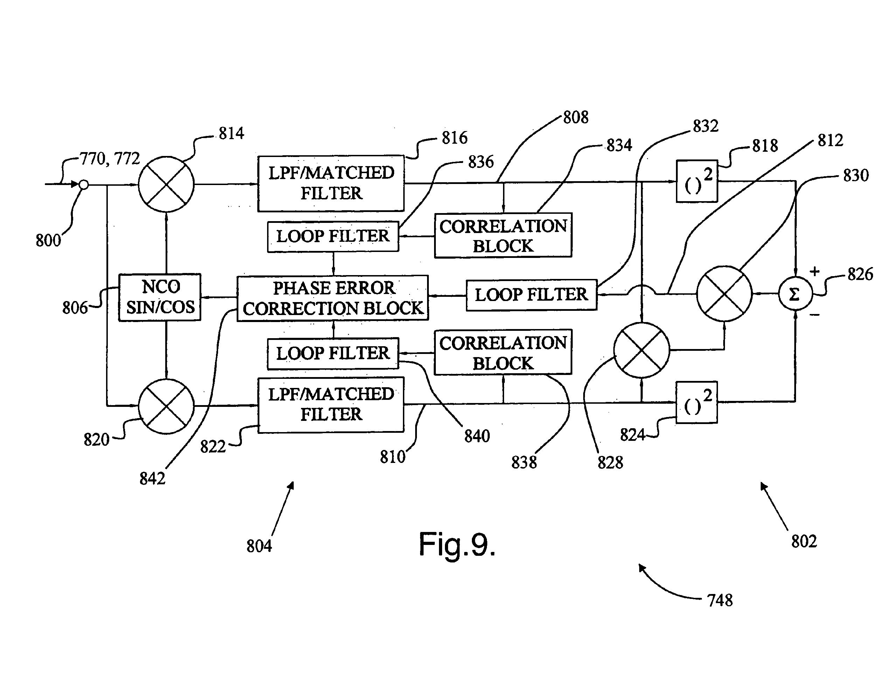

Once the received carrier signal 706 is translated to baseband, the signal is passed to ADC 746 and converted into data stream 770 (FIG. 9) containing data 702 and a preamble, and data stream 772 (FIG. 9) containing data 704 and a preamble. Each preamble may include a preamble sequence associated with the I component and a separate preamble sequence associated with the Q component. The audio or video data in data steams 770 and 772 is located between the preamble sequences. As set forth above, the preamble serves as a training sequence, and, for example, is in the form of a CAZAC sequence. Data streams 770 and 772 are then demodulated by demodulator 748 to produce the original I and Q components. De-mapper 750 translates the I and Q components into encoded primary data stream 770 and encoded secondary data stream 772. These encoded bit streams, which were interleaved by interleaver 716, are recovered by de-interleaver 751 and passed to decoder 748. Decoder 748 employs known bit and block decoding methods to decode the primary and secondary bit streams to produce the original input signals containing the primary and secondary data 702, 704. In other embodiments of the present invention, multiple decoders may be used, e.g., outer and inner decoders. Receiver 740 may also use a feed forward correction technique to improve its detection of the secondary data. By knowing the relative I/Q quadrant, receiver 740 may be enhanced to perform better by having such a priori knowledge, which assists in the detection of the transmitted signal.

Although hierarchical modulation allows a greater amount of data to be transmitted over a carrier signal, it is possible that secondary data stream 772 may cause noise in primary data stream 770 or otherwise render primary data stream 770 more susceptible to noise. Accordingly, it is desirable to employ the present invention to demodulate carrier signal 706.

Referring now to FIG. 9, demodulator 748 includes demodulator input 800, phase-locked loop 802, and secondary tracking loop 804.

Demodulator input 800 is the input node of demodulator 748, and is configured to receive data stream 770, 772 extracted from carrier signal 706, for example, via tuner 744 and ADC 746. Phase-locked loop 802 includes oscillator 806, and is configured to track data stream 770, 772 received by demodulator input 800, for example to track phase changes in data stream 770, 772. Secondary tracking loop 804 is configured to configured to provide a phase/frequency correction to oscillator 806, based on the preamble, in order to extract the in-phase components and quadrature components, i.e., the I and Q components from data stream 770, 772, as described in greater detail below.

Phase-locked loop 802 is exemplified by a Costas loop having I channel 808 operating on the I data component, Q channel 810 operating on the Q data component, and error channel 812 used for controlling oscillator 806. Data stream 770, 772 passes into each of I channel 808 and Q channel 810, each of which feed into error channel 812. In the embodiment shown, oscillator 806 is a numerically controlled oscillator (NCO), although any suitable oscillator may be used without departing from the scope of the present invention. For example, a voltage controlled oscillator (VCO) might be used, in which case phase-locked loop 802 would be accordingly configured to operate therewith.

I channel 808 includes mixer 814, low pass filter/matched filter 816, and squaring unit 818. Q channel 810 similarly includes mixer 820, low pass filter/matched filter 822, and squaring unit 824. Mixer 814 and mixer 820 are used in conjunction with oscillator 806 to separate the sine and cosine components of data stream 770, 772, and provide as output a DC component and a high frequency component. Low pass filter/matched filter 816 receives the output of mixer 814, and passes only the baseband signal containing the I data component into I channel 808. Similarly, low pass filter/matched filter 822 receives the output of mixer 820, and passes only the baseband signal containing the Q data component into Q channel 810. In each case, the baseband signal output by the respective low pass filter/matched filter contains amplitude information centered around DC. Thus, each of the I and Q data components are in the form of positive or negative amplitude information, which is then rendered into positive amplitude information by squaring unit 818 and squaring unit 824, respectively. However, because the amplitude sign is removed from the I channel 808 and Q channel 810, phase-locked loop 802 in the form of a Costas loop has a pi/4 phase ambiguity, i.e., the Costas loop cannot distinguish between phase angles of 45 degrees, 135 degrees, 225 degrees, and 315 degrees.

Phase-locked loop 802 also includes summer 826, mixer 828, mixer 830, and loop filter 832. Each of I channel 808 and Q channel 810 feed the output of squaring unit 818 and squaring unit 824, respectively, into summer 826, which generates an error signal based on the phase and frequency of oscillator 806. Each of I channel 808 and Q channel 810 also feed the output of low pass filter/matched filter 816 and low pass filter/matched filter 822, respectively, into mixer 828. The error signal from summer 826 and the output of mixer 828 are then passed into mixer 830 to provide an error correction signal into loop filter 832 as a control input to oscillator 806.

If phase-locked loop 802 is locked, the I and Q magnitudes will be the same. Any difference will be caused by noise and/or an error in oscillator 806 phase/frequency. Hence, the output of summer 826 is noise plus oscillator 806 (NCO) error. Since summer 826 cannot determine what phase angle the loop is near, the output must be compensated. That is, the direction to adjust the phase to one of the Pi/4 ambiguities is dependent on which ambiguity phase-locked loop 802 is closest to. For example, if the current NCO phase is 50 degrees, summer 826 error is negative (the Q path is larger in magnitude than the I path), and NCO phase angle is reduced. On the other hand if the NCO phase is 140 degrees, the phase is still slightly larger and the NCO phase angle must be reduced. However, at 140 degrees, the I path is larger in magnitude than the Q path and summer 826 error is positive, and the NCO phase angle must also be reduced. This reduction is performed by mixer 828 and mixer 830, which adjust summer 826 error based on the current quadrant in which phase-locked loop 802 is operating.

Loop filter 832 is a low pass filter that averages the error output summer 826 to minimize the effect of noise. Noise on the NCO (oscillator 806) control will also mix with the noise on received data stream 770, 772 creating an even noisier summer 726 error output. For this reason, loop filter 732 is usually adjusted to be fast for initial acquisition (i.e finding the initial phase/frequency), although this requires a relatively high signal to noise ratio. Once the system is tracking, however, loop filter 732 is slowed to filter out more noise. As loop filter 732 gets slower, the characteristics of the noise change from a white noise to flicker, shot and random walk noise.

Because of the phase ambiguity of the Costas loop, the I data component and Q data component can be rotated and/or inverted, reducing the performance of SDAR receiver 740. The inventors have discovered that a secondary preamble tracking loop, such as secondary tracking loop 804, may be employed to reduce the likelihood of the I data component and Q data component being rotated and/or inverted. Without secondary tracking loop 804, any error in the oscillator 806 is seen as a low frequency oscillation along with cross coupling of I channel 808 and Q channel 810 (not including noise). This cross coupling increases the magnitude of the signal in one channel at the expense of the other, depending on the phase error in oscillator 806 and the data transmitted. Secondary tracking loop 804 reduces such cross coupling by reducing the error in oscillator 806. For example, when the signal, i.e., data stream 770, 772 becomes weak, e.g., during low signal-to-noise ratio conditions, secondary tracking loop 804 is used to help maintain oscillator 806 by detecting the direction and magnitude of slow drifts, e.g., random walk, in the primary frequency and timing loop, phase-locked loop 802, and to provide a correction to such errors.

Accordingly, secondary tracking loop 804 includes correlation block 834 and loop filter 836 associated with I channel 808, and correlation block 838 and loop filter 840 associated with Q channel 810. Each of correlation block 834 and correlation block 838 are coupled to phase-locked loop 802, and coupled to loop filter 836 and loop filter 840, respectively. Secondary tracking loop 804 also includes phase error correction block 842 coupled to oscillator 806 as part of error channel 812. The output of low pass filter/matched filter 816 feeds into correlation block 834, which provides input to loop filter 836. Similarly, the output of low pass filter/matched filter 822 feeds into correlation block 838, which provides input to loop filter 840. The output of loop filter 832, loop filter 836, and loop filter 840 are input signals to phase error correction block 842, which outputs the control signal to oscillator 806. Each of correlation block 834 and correlation block 838 includes one or more correlators, for example, early, prompt, and late correlators, and are used detect the preamble.

Secondary tracking loop 804 is configured to individually detect the preamble relative to the I data component and individually detect the preamble relative to the Q data component using correlation block 834 and correlation block 838, respectively. In the embodiment depicted, correlation block 834 and correlation block 838 are the same, although it is contemplated that correlation block 834 and correlation block 838 may be different, for example, if the preamble includes a training sequence for I channel 808 different than the corresponding training sequence for Q channel 810.

Secondary tracking loop 804 is configured to determine if data stream 770, 772 has a low signal-to-noise ratio, and if so, to detect the preamble, increasing a detected power of data stream 770, 772 during a passage of the preamble through secondary tracking loop 804, by which secondary tracking loop 804 provides a phase/frequency correction to oscillator 806. More specifically, phase error correction block 842 is configured to determine if data stream 770, 772 has a low signal-to-noise ratio, and each of correlation block 834 and correlation block 838 are configured to increase the detected power of data stream 770, 772 during the passage of the preamble through secondary tracking loop 804. If phase error correction block 842 determines that data stream 770, 772 has a low signal-to-noise ratio in phase-locked loop 802, secondary tracking loop 804 is used to provide correction to oscillator 806. If data stream 770, 772 does not have a low signal-to-noise ratio, the unmodified output of loop filter 832 is used to control oscillator 806.

Phase error correction block 842 is a state machine/algorithm that uses both the Costas loop error (phase-locked loop 802 error) along with a correlation block error generated by correlation block 834 and correlation block 838 to adjust the phase angle of oscillator 806 based on a phase error correction signal. As loop filter 832 is slowed, the resulting noise may cause slow phase drifting. The correlation block error is used to correct for this slow phase drifting, allowing phase-locked loop 802 to employ a loop bandwidth much narrower than the training sequence. Secondary tracking loop 804 detects random walk errors and compensates for them based on the output of correlation block 834 and correlation block 838.

Each correlation block matches the known preamble sequences with incoming data in data stream 770, 772 to find the preamble in the incoming data by correlating the known preamble sequences with the preambles, and outputs the correlation of the received signal with the stored training sequences. Because the preamble is typically longer than an individual bit, the correlation block error, i.e., the output of correlation block 834 and correlation block 838, is much higher in detected power than the incoming data stream 770, 772 received by the correlation blocks. This allows phase/frequency information in data stream 770, 772 to be determined notwithstanding the low signal-to-noise ratio.

Phase error correction block 842 is configured to generate a phase error correction signal from data stream 770, 772 based on the output of correlation block 834 and correlation block 838, whereby secondary tracking loop 804 provides a phase/frequency correction to oscillator 806 based at least in part on the phase error correction signal. When oscillator 806 is tracking, the output of each of correlation block 834 and correlation block 838 is periodic pulses that occur every time the training sequence in data stream 770, 772 occurs, which has known timing. These outputs are used, after filtering with the respective loop filter 836 and loop filter 840, as error signal inputs to phase error correction block 842 separate from the phase-locked loop 802 error signal.

The operation of demodulator 748 in performing demodulation of phase shift key carrier signal 706 in the present embodiment similar to that described above with respect to Fig. 6, and hence, such description applies equally to the present embodiment.

While this invention has been described as having an exemplary design, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

## Claims

1. A method for performing demodulation of a modulated signal, comprising:
receiving (S502) a data stream extracted from the carrier signal, the data stream having a preamble;
detecting (S508) the presence of the preamble; and
if the preamble is detected, providing (S514) a correction.

2. The method of claim 1, further comprising tracking (S504) the data stream using a phase-locked loop.

3. The method of claim 2, wherein the phase-locked loop includes an oscillator (376), and wherein said providing correction is providing a phase/frequency correction to the oscillator.

4. he method of claim 2, wherein the phase locked loop is configured as a Costas loop.

5. The method of claim 1, further comprising:
determining (S506) if the data stream has a low signal-to-noise ratio,
wherein said detecting the presence of the preamble and said providing correction are based on said determining if the data stream has the low signal-to-noise ratio.

6. The method of claim 5, wherein the correction is based at least in part on said detecting the presence of the preamble.

7. The method of claim 5, wherein said determining if the phase-locked loop has the low signal-to-noise ratio is determining if the phase-locked loop has the low signal-to-noise ratio using a phase error correction block (442).

8. The method of claim 1, wherein said detecting the presence of the preamble is based on correlating the preamble with a known preamble sequence.

9. The method of claim 8, further comprising increasing (S510) a detected power of the data stream.

10. The method of claim 8, wherein said correlating the preamble with a known preamble sequence includes using a correlation block to increase sensitivity to the data stream during a passage of the preamble through the correlation block.

11. The method of claim 8, further comprising generating (5512) a phase error correction signal, wherein said providing correction is based at least in part on the phase error correction signal.

12. The method of claim 1, wherein the data stream includes an in-phase component and a quadrature component, and wherein the presence of the preamble is individually detected relative to the in-phase component and individually detected relative to the quadrature component.

13. A demodulator for demodulating a modulated signal, comprising:
a demodulator input (370) configured to receive a data stream having a preamble;
a phase-locked loop (402) configured to track the data stream received by the demodulator input, the phase-locked loop including an oscillator; and
a secondary tracking loop (404) configured to provide a correction to the oscillator based on the preamble.

14. The demodulator of claim 13, wherein the secondary tracking loop is configured to:
determine if the data stream has a low signal-to-noise ratio; and
detect the presence of the preamble if it is determined that the data stream has the low signal-to-noise ratio,
wherein the secondary tracking loop provides the correction to the oscillator based at least in part on detecting the presence of the preamble.

15. The demodulator of claim 14, wherein the secondary tracking loop further includes a phase error correction block (442) coupled to the oscillator, the phase error correction block configured to determine if the phase-locked loop has the low signal-to-noise ratio.

16. The demodulator of claim 14, wherein the secondary tracking loop increases a detected power of the data stream during a passage of the preamble through the secondary tracking loop.

17. The demodulator of claim 16, wherein the secondary tracking loop includes a correlation block (434, 438) coupled to the phase locked loop, the correlation block configured to increase the detected power of the data stream during the passage of the preamble through the secondary tracking loop.

18. The demodulator of claim 14, wherein the secondary tracking loop further includes a phase error correction block (442) coupled to the oscillator, the phase error correction block configured to generate a phase error correction signal from the data stream; and wherein the secondary tracking loop provides phase/frequency correction to the oscillator based at least in part on the phase error correction signal.

19. The demodulator of claim 14, wherein the data stream includes an in-phase component and a quadrature component, and wherein the secondary tracking loop is configured to individually detect the preamble relative to the in-phase component and individually detect the preamble relative to the quadrature component.

20. The demodulator of claim 14, wherein the phase-locked loop is configured as a Costas loop.

21. A demodulator for demodulating a modulated signal, comprising:
input means (370) for extracting a data stream from the signal, the data stream having a preamble;
first tracking means (402) for tracking the data stream received by the input means, the first tracking means including an oscillator;
second tracking means (404) for providing a phase/frequency correction to the oscillator.

22. The demodulator of claim 21, wherein the second tracking means includes:
determination means for determining if the data stream has a low signal-to-noise ratio; and
detection means for detecting the presence of the preamble if the determination means determines that the data stream has the low signal-to-noise ratio, and the second tracking means provides the phase/frequency correction to the oscillator based at least in part on the detection means detecting the presence of the preamble.

23. The demodulator of claim 21, wherein the second tracking means increases a detected power of the data stream during a passage of the preamble through the second tracking means.

24. The demodulator of claim 21, wherein the second tracking means generates a phase error correction signal from the data stream, and wherein the second tracking means provides the phase/frequency correction to the oscillator based at least in part on the phase error correction signal.
